# EUROPÄISCHE PATENTSCHRIFT

(11) **EP 2 876 421 B1**
(45) Veröffentlichungstag und Bekanntmachung des Hinweises auf die Patenterteilung: **05.07.2017**
(21) Anmeldenummer: 14181889.8
(22) Anmeldetag: 22.08.2014
(51) Int. Cl.: F16L 11/08, G01M 5/00, G01L 9/00

(54) **Elastomerer Hohlkörper, insbesondere elastomerer Schlauch, mit Sensorelement zur Erfassung eines Druckes sowie Verfahren hierzu**
Elastomer hollow body, in particular elastomer hose, having a sensor element for measuring pressure and method for the same
Corps creux en élastomère, en particulier tuyau en élastomère, doté d'un élément de capteur destiné à détecter une pression et procédé associé

(30) Priorität: 25.11.2013 DE 102013224023
(43) Veröffentlichungstag der Anmeldung: 27.05.2015
(73) Patentinhaber: ContiTech AG, 30165 Hannover (DE)
(72) Erfinder: Sostmann, Stefan, 30855 Langenhagen (DE); Wietzke, Steffen, 31275 Lehrte (DE); Lorenz, Corinna, 38106 Braunschweig (DE); Jungrichter, Frank, 34497 Korbach (DE); Koch, Harald, 35110 Frankenau-Alten Lotheim (DE)
(74) Vertreter: Preusser, Andrea

(56) Entgegenhaltungen:
- EP-A1- 0 505 905
- EP-A2- 0 756 162
- WO-A1-91/17701
- DE-A1-102011 001 245
- DE-T2-602004 001 105
- US-A- 5 431 064
- US-A1- 2012 136 592

## Beschreibung

Die Erfindung betrifft einen elastomeren Hohlkörper, insbesondere einen elastomeren Schlauch, zur Leitung und bzw. oder Aufnahme flüssiger, gasförmiger und bzw. oder pastöser Medien mit einem Sensorelement zur Erfassung eines Druckes gemäß dem Oberbegriff des Anspruchs 1 sowie ein Verfahren zur Druckerfassung eines derartigen elastomeren Hohlkörpers gemäß dem Anspruch 8.

Für zahlreiche technische Anwendungen ist die Erfassung des Druckes von Objekten oder flüssigen, gasförmigen bzw. pastösen Medien erforderlich, um diese z.B. zur Überwachung der Einhaltung vorbestimmter Druckgrenzen oder zur Regelung von Prozessen auf vorbestimmte Drücke zu verwenden. So kann der Druck eines Mediums z.B. in einem Speicher eines Mediums wie einem Tank oder z.B. in einer Schlauchleitung zum Transport des Mediums relevant sein, um einen Prozess in Abhängigkeit dieses Druckes zu betreiben oder den Druck des Mediums zu überwachen. Beispielsweise ist es bei Schlauchanwendungen im medizinischen Bereich nicht nur vorteilhaft sondern auch erforderlich, den Druck in einem durchströmten Schlauch im Betrieb zu erfassen.

Für derartige Anwendungen ist es bekannt, eine Druckmessung in einem Schlauch mittels eines T-Stückes durchzuführen, welches über eine Stichleitung an den Schlauch angeschlossen wird. Dieses T-Stück ist zum Teil mit Luft gefüllt und es kann hier der Betriebsdruck gemessen werden.

Ferner sind Druckschalter bekannt, die an einem Schlauch angebracht werden. Derartige Druckschalter dienen aufgrund ihrer hohen Messungenauigkeit jedoch meist nur als schaltendes Element, welches das Einhalten bzw. Überschreiten eines Grenzwertes anzeigen kann, jedoch nicht als messendes Element.

Es sind auch Druckmessvorrichtungen für Schläuche bekannt, bei denen der Schlauch von einem runden Querschnitt in einen elliptischen Querschnitt verformt wird, wobei diese Verformung durch Aufbringen einer Vorspannkraft erfolgt. Druckänderungen im Inneren des Schlauches führen zu einer Veränderung der Vorspannkraft, welche gemessen und in Relation zu dem Innendruck des Schlauches gesetzt werden kann.

Die US 2012 222 770 A1 betrifft die Druckmessung bei einem Schlauch, wobei zu diesem Zweck druckempfindliche Garne in die Festigkeitsträgerschicht eingebracht werden. Über den Druck auf diese Garne der Festigkeitsträgerschicht wird auf den Druck im Inneren des Schlauches geschlossen. Dieses Messprinzip erfordert es, dass ein derartiges Garn in den Festigkeitsträger überhaupt eingearbeitet werden kann und die erforderliche Festigkeit dieser Schicht gegeben bleibt.

Die WO 2012/071424 A2 betrifft die Druckmessung bei einem Schlauch, welcher hierzu zwei elektrisch leitfähige Schichten mit einer dazwischenliegenden druckempfindlichen Schicht aufweist. Über die beiden elektrisch leitfähigen Schichten wird ein elektrisches Signal angelegt und dessen Antwortsignal ausgewertet, welches aufgrund der dazwischenliegenden druckempfindlichen Schicht einen Rückschluss auf den Druck zulässt, der die innere elektrisch leitfähige Schicht gegen die äußere elektrisch leitfähige Schicht drückt. Diese Art der Druckmessung bei Schläuchen ist aufgrund der erforderlichen zusätzlichen Schichten vergleichsweise aufwendig und führt auch zu einer deutlichen Vergrößerung der Stärke der Schlauchwand. Auch kann die Flexibilität des Schlauches durch die Steifigkeit der zusätzlichen Schichten reduziert werden.

Die US 2005/0148884 A1 betrifft einen Drucksensor für einen Schlauch, wobei der Drucksensor eine deformierbare Membran aufweist, die durch einen Luftspalt in radialer Richtung von einer inneren metallisierten Oberfläche beabstandet ist. Zwischen einer Elektrode auf der Membran und der metallisierten Oberfläche liegt eine Spannung an. Wird ein bestimmter Druck erreicht, so kontaktiert die Elektrode die metallisierte Oberfläche und ein Strom fließt, so dass ein Erreichen des vorbestimmten Druckes detektiert werden kann. Dieser Sensor dient daher lediglich der Schwellwertanzeige.

Nachteilig ist bei den bekannten Drucksensoren, die bei elastomeren Hohlkörpern wie z.B. Schläuchen eingesetzt werden, dass sie stets besondere bauliche Maßnahmen wie zusätzliche Abzweige, eine aufwendige Integration in den Aufbau des Hohlkörpers sowie eine Führung der Signalleitungen in den bzw. durch die Schichten des Hohlkörpers erfordern. Ferner sind viele Arten von Drucksensoren lediglich zur Erfassung eines Schwellwertes geeignet, jedoch nicht für kontinuierliche Druckmessungen.

Die US 2012/0136592 A1 betrifft eine druckerfassende Schlauchanordnung, wobei erste und zweite Leiter mit einer elektronischen Schaltung verbunden sind. Die Schaltung erzeugt eine elektrische Antwort über die ersten und zweiten Leiter. Die ersten und zweiten Leiter können gleich oder unterschiedlich ausgebildet sein und z.B. natürliche oder synthetische Fasern und Textilien aufweisen.

Die EP 0 505 905 A1 betrifft einen Fahrzeugluftreifen mit einer integrierten Transponderschaltung, welche bei einer Abfrage durch ein externes Hochfrequenzsignal eine Reifenidentifikation oder andere digital-kodierte Daten übertragen kann. Der Transponder kann einen Drucksensor aufweisen.

Die WO 91/17701 betrifft ein Überwachungssystem für Blutdruck mit einem Messfühler in Form eines leitfähigen Gummischlauches mit leitfähigen Anschlüssen an den beiden Enden. Alternativ kann der Gummischlauch auch leitfähige oder halbleitfähige Bänder, Streifen als druckansprechende Elemente aufweisen.

Eine Aufgabe der vorliegenden Erfindung ist es, einen elastomeren Hohlkörper, insbesondere einen elastomeren Schlauch, der eingangs beschriebenen Art bereit zu stellen, so dass sein Druck bzw. der des darin befindlichen Mediums kontinuierlich sowie einfacher, direkter und bzw. oder genauer erfasst werden kann. Zumindest sollen Alternativen zu den bekannten Arten der Druckerfassung bei elastomeren Hohlkörpern, insbesondere bei elastomeren Schläuchen, bereitgestellt werden.

Die Aufgabe wird erfindungsgemäß durch einen elastomeren Hohlkörper mit den Merkmalen gemäß Anspruch 1 sowie ein Verfahren zur Druckerfassung eines elastomeren Hohlkörpers mit den Merkmalen gemäß Anspruch 8 gelöst. Vorteilhafte Weiterbildungen sind in den Unteransprüchen beschrieben.

Der Erfindung liegt dabei die Erkenntnis zugrunde, dass leitfähige elastomere Werkstoffe bei elastomeren Hohlkörpern einfacher eingesetzt und insbesondere in diese integriert werden können als bekannte Drucksensoren, welche üblicherweise bauliche Veränderungen des elastomeren Hohlkörpers erfordern. Dies ist insbesondere bei flexiblen Schläuchen unerwünscht. Auch können derartige Sensorelemente sehr klein ausgeführt werden, was eine direkte Integration in den Aufbau des elastomeren Hohlkörpers, insbesondere in eine seiner Schichten bzw. zwischen diese, ermöglicht. Bei elastomeren Schläuchen erfolgt die Integration vorzugsweise derart, dass sich trotz des Sensorelementes möglichst kleine Schlauchgeometrien realisieren lassen.

Gleichzeitig kann der elastomere Werkstoff derart ausgebildet sein, dass er seiner elektrischen Kapazität als Drucksensor genutzt werden kann. Hierzu wird die Kapazität über den elastomeren Werkstoff erfasst und ausgewertet. Das Sensorelement bzw. dessen elastomerer Werkstoff kann als ganze druckempfindliche Schicht ausgestaltet sein oder als ein druckempfindlicher Teilbereich einer Schicht oder auch als ein druckempfindliches Mess-Pad, welches auf einer Schicht bzw. zwischen zwei Schichten angeordnet ist. Dabei wird das Sensorelement bzw. dessen elastomerer Werkstoff vorzugsweise geometrisch so ausgeführt, dass es bzw. er sich möglichst so in den Schichtaufbau des elastomeren Hohlkörpers integrieren lassen, dass sich dessen geometrische Beschaffenheit nicht bzw. möglichst wenig verändert.

Gemäß einem Aspekt der vorliegenden Erfindung vergrößert sich die elektrische Kapazität des elastomeren Werkstoffs mit ansteigendem Druck und die elektrische Kapazität des elastomeren Werkstoffs hängt nicht-linear, vorzugsweise zumindest abschnittsweise sprunghaft, von dem Druck ab. Über eine steigende elektrische Kapazität bei ansteigendem Druck kann ein einfach auszuwertender Zusammenhang zwischen diesen Größen erreicht werden. Ist dieser Zusammenhang gleichzeitig nicht-linear, so treten in unterschiedlichen Druckbereichen unterschiedliche Empfindlichkeiten auf, die je nach Anwendungsfall vorteilhaft genutzt werden können. Kommt es bei der Überwachung auf Überdruck auf bestimmte Grenzwerte an, z.B. bei medizinischen Anwendungen, so ist ein sprunghafter Anstieg der Kapazität in diesem Druckbereich besonders vorteilhaft, um mit einer einfachen Messauswertung das Überschreiten eines Grenzdrucks zu erfassen.

Gemäß einem weiteren Aspekt der vorliegenden Erfindung ist das Sensorelement in einer ersten Schicht des elastomeren Hohlkörpers, welche vorzugsweise direkt mit dem Medium in Kontakt steht, integriert angeordnet. Auf diese Weise wird der Aufbau des elastomeren Hohlkörpers in seiner Dicke nicht verändert. Ferner behindert die Schicht selbst nicht die Druckübertragung zum Sensorelement hin, so dass der Druck mittels des Sensorelementes direkter und damit genauer und schneller erfasst werden kann als bei einer Anordnung des Sensorelementes auf der dem zu erfassenden Medium abgewandten Seite der Schicht. Dabei wird die Druckerfassung weiter begünstigt, falls die das Sensorelement aufweisende Schicht direkt mit dem zu erfassenden Medium in Kontakt steht, weil auf diese Weise auch das Sensorelement direkt mit dem Medium in Kontakt steht und so dessen Druck direkt und unmittelbar und somit auch ohne Zeitverzögerung erfassen kann.

Gemäß einem weiteren Aspekt der vorliegenden Erfindung ist das Sensorelement auf einer dem Medium zugewandten Seite einer ersten Schicht des elastomeren Hohlkörpers, welche vorzugsweise direkt mit dem Medium in Kontakt steht, angeordnet. Auf diese Weise kann auf eine Integration des Sensorelementes in die Schicht verzichtet werden, was die Herstellung dieser Schicht und damit des gesamten elastomeren Hohlkörpers vereinfacht. Gleichzeitig kann das Sensorelement auf dieser Schicht innen, d.h. dem Medium zugewandt, angeordnet werden, um dessen Druck schneller und direkter erfassen zu können. Dies wird besonders dadurch unterstützt, falls diese Schicht die innerste Schicht des elastomeren Hohlkörpers ist, welches direkt mit dem Medium in Kontakt steht, weil dann das Sensorelement mit dem Medium einen direkten Kontakt hat bzw. sogar in dieses eintaucht. Auch kann das Sensorelement so nachträglich auf dieser Schicht vorgesehen werden, was die Montage erleichtert und eine Nachrüstung auf bestehende Anwendungen ermöglicht.

Gemäß einem weiteren Aspekt der vorliegenden Erfindung ist das Sensorelement auf einer dem Medium abgewandten Seite einer ersten Schicht des elastomeren Hohlkörpers, welche vorzugsweise direkt mit dem Medium in Kontakt steht, angeordnet. Auf diese Weise kann das Sensorelement vor dem Medium geschützt werden, z.B. weil das Medium und das Material des Sensorelementes miteinander unverträglich sind, z.B. weil das Medium nicht durch das Material des Sensorelementes verunreinigt werden darf bzw. das Medium das Sensorelement beschädigen oder sogar zerstören kann.

Gemäß einem weiteren Aspekt der vorliegenden Erfindung weist der elastomere Hohlkörper ferner eine zweite Schicht auf, welche einen Festigkeitsträger aufweist und welche vorzugsweise auf einer dem Medium abgewandten Seite der ersten Schicht angeordnet ist. Als Festigkeitsträger können vorzugsweise Gewirke, Gestricke bzw. Geflechte aus z.B. textilen Materialien verwendet werden. Hierdurch kann die Stabilität des elastomeren Hohlkörpers erhöht werden. Bei allen Anordnungsvarianten des Sensorelementes ist zu beachten, dass eine möglicherweise vorhandene Festigkeitsträgerschicht des elastomeren Hohlkörpers, die insbesondere bei elastomeren Schläuchen üblich ist, dazu dient, den Innendruck des Mediums zu tragen. Somit ist in diesem Fall das Sensorelement zwischen dem Medium und der Festigkeitsträgerschicht anzuordnen.

Gemäß der vorliegenden Erfindung weist der elastomere Werkstoff zwei einander gegenüberliegende Elektroden auf, die in Längsrichtung des elastomeren Werkstoffs voneinander beabstandet sind. Diese Art der elektrischen Ankopplung und Auswertung ist vorteilhaft, weil keinerlei elektrische Zuleitungen verwendet werden, die durch die Schichten des elastomeren Hohlkörpers geführt bzw. in diese integriert werden müssen. Hierbei ist es erforderlich, dass die dem Medium sowie dem Sensorelement abgewandten Schichten des elastomeren Hohlkörpers nicht elektrisch leitfähiger bzw. nicht dielektrisch stärker polarisierbar sind als der elastomere Werkstoff des Sensorelements, damit die Druckerfassung mittels eines von außen auf den elastomeren Hohlkörper aufgesetztes Zwei-Elektrodensystem erfolgen kann.

Gemäß einem weiteren Aspekt der vorliegenden Erfindung weist der elastomere Werkstoff eine vulkanisierte leitfähige Kautschukmischung auf, die wenigstens einen polaren oder unpolaren Kautschuk und wenigstens einen leitfähigen Füllstoff und bzw. oder wenigstens ein leitfähiges Additiv und wenigstens einen Thermoplasten und weitere Zusatzstoffe enthält. Vorteilhaft ist hierbei, dass sich durch die Kombination von leitfähigem Füllstoff bzw. Additiv, Kautschuk und Thermoplasten Kautschukmischungen ergeben, bei denen durch die Wahl des Thermoplasten die Widerstandsabhängigkeit des Vulkanisats von der Temperatur definiert eingestellt werden kann. Hierbei findet überraschenderweise im gewünschten Temperaturbereich eine sprunghafte Änderung der Leitfähigkeit statt, so dass die erfindungsgemäße Kautschukmischung als Widerstandstemperatursensor eingesetzt werden kann. Die Funktion des Widerstands über der Temperatur ist hierbei nicht linear.

Die vulkanisierte Kautschukmischung enthält wenigstens einen polaren oder unpolaren Kautschuk. Die Begriffe Kautschuk und Elastomer werden in dieser Schrift synonym verwendet. Unpolare Elastomere sind reine Kohlenwasserstoffsysteme, deren Makromoleküle nur aus Kohlenstoff- und Wasserstoffatomen bestehen. Sie sind nicht mineralölbeständig. Polare Elastomere sind mineralölbeständig und haben in Makromolekül außer Kohlenstoff- und Wasserstoffatomen andere Atome, z.B. Chlor, Fluor, oder Atomgruppen z.B. Nitril-, Estergruppen, die eine Polarität im Makromolekül hervorrufen. Der polare oder unpolare Kautschuk ist dabei ausgewählt aus der Gruppe, bestehend aus natürlichem Polyisopren und bzw. oder synthetischem Polyisopren und bzw. oder Butadien-Kautschuk und bzw. oder Styrolbutadienkautschuk und bzw. oder Flüssigkautschuken und bzw. oder Halobutylkautschuk und bzw. oder Polynorbornen und bzw. oder Isopren-Isobutylen-Copolymer und bzw. oder Ethylen-Propylen-DienKautschuk und bzw. oder Nitrilkautschuk und bzw. oder Chloroprenkautschuk und bzw. oder Acrylat-Kautschuk und bzw. oder Fluorkautschuk und bzw. oder Silikon-Kautschuk und bzw. oder Epichlorhydrinkautschuk und bzw. oder Styrol-Isopren-Butadien-Terpolymer und bzw. oder hydrierter Acrylnitrilbutadienkautschuk und bzw. oder Isopren-Butadien-Copolymer und bzw. oder Ethylen-Propylen-Mischpolymerisat und bzw. oder Ethylen-Propylen-Dien-Mischpolymerisat (EPDM) und bzw. oder (teil)hydrierter Nitrilkautschuk und bzw. oder Butylkautschuk und bzw. oder Brombutylkautschuk und bzw. oder Chlorbutylkautschuk und bzw. oder Chlorsulfoniertes Polyethylen und bzw. oder Chlorsulfoniertes Polyethylen und bzw. oder Polyepichlorhydrin und bzw. oder EthylenVinylacetat-Kautschuk und bzw. oder Acrylat-Kautschuk und bzw. oder Fluorierter Methylsiliconkautschuk und bzw. oder Perfluorenierter Propylen-Kautschuk und bzw. oder Perflurocarbon-Kautschuk und bzw. oder Polyurethan. Das Elastomer ist bevorzugt in Mengen von wenigstens 50 php in der erfindungsgemäßen Kautschukmischung vorhanden. Es ist auch möglich, dass eine Kombination von wenigstens zwei Elastomeren verwendet wird. Die obige Mengenangabe bezieht sich in diesem Fall dann auf die Gesamtmenge an Elastomeren.

Bevorzugt ist es weiterhin, dass die Kautschukmischung wenigstens einen leitfähigen Füllstoff und bzw. oder wenigstens ein leitfähiges Additiv enthält. Hierbei handelt es sich bevorzugt um wenigstens einen leitfähigen Ruß als Füllstoff bzw. um wenigstens eine ionische Flüssigkeit als leitfähiges Additiv. Der leitfähige Füllstoff wird in einer bevorzugten Ausführungsform in Mengen von 5 bis 100 php, besonders bevorzugt in Mengen von 10 bis 80 php, ganz besonders bevorzugt in Mengen von 20 bis 60 php, eingesetzt. Die in dieser Schrift verwendete Angabe php (parts per hundred parts of polymer by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Polymere bezogen. Der Begriff Polymere umfasst hierbei Kautschuke, Elastomere, thermoplastische Elastomere (TPE) und Thermoplasten (TP).

In einer besonders bevorzugten Ausführungsform wird ein leitfähiger Ruß mit einer Ölabsorptionszahl (OAN) gemäß ISO 4656, zwischen 90 bis 150 ml/100g, bevorzugt zwischen 110 und 150 ml/100g und bzw. oder einer BET-Zahl gemäß ISO 4652 zwischen 20 bis 200 m2/g, bevorzugt zwischen 30 und 180 m2/g eingesetzt. Die OAN-Zahl ist hierbei eine wichtige Größe für die Bestimmung der Struktur des Rußes, während mittels der BET-Zahl die spezifische Oberfläche des Rußes angegeben werden kann. Alternative leitfähige Füllstoffe können u.a. Kohlenstoffnanoröhren, metallische Partikel oder auch Kohlenstofffasern sein.

Die Kautschukmischung kann neben den leitfähigen Füllstoffen auch noch weitere Füllstoffe wie nicht-leitfähige Ruße, Kieselsäure, Aluminiumhydroxid, Schichtsilikate, Kalk, Kreide, Stärke, Magnesiumoxid, Titandioxid, Kautschukgele, Kurzfasern usw. in beliebigen Kombinationen enthalten. In einer besonderen Ausführungsform ist die vulkanisierte Kautschukmischung allerdings frei von weiteren Füllstoffen und enthält nur die oben genannten leitfähigen Füllstoffe.

In einer weiteren besonderen Ausführungsform enthält die Kautschukmischung keine leitfähigen Füllstoffe, sondern lediglich wenigsten ein leitfähiges Additiv, wie z.B. wenigstens eine ionische Flüssigkeit, und wenigstens einen der oben aufgeführten weiteren Füllstoffe.

Bevorzugt ist es, dass in der Kautschukmischung noch wenigstens ein Thermoplast (TP) enthalten ist. Hierbei können alle der fachkundigen Person bekannten Thermoplasten, wie bspw. PE, insbesondere HDPE, LDPE, LLDPE; UHMWPE, PS, PP. PVC, PC, PBT, PET, PA, POM, PC/ABS, PPO/PS, SAN, ABS, PMMA, PEEK, PPS, PES, PAI, PEI, PSU oder APE, verwendet werden. Besonders geeignet PE, insbesondere LLDPE, PPE und bzw. oder PPO. Die genannten können hierbei alleine oder in Kombination verwendet werden. Die Nomenklatur der Thermoplasten erfolgt gemäß DIN EN ISO 1042-1 2002-06. Die Gesamtmenge des bzw. der Thermoplasten beträgt bevorzugt 20 bis 150 php, besonders bevorzugt 30 bis 150 php und ganz besonders bevorzugt 50 bis 100 php.

Die vorliegende Erfindung betrifft auch ein Verfahren nach Anspruch 8. Ein derartiges Verfahren auf das zuvor beschriebene Sensorelement anzuwenden ist vorteilhaft, weil dessen Vorzüge so für ein einfaches und genaues Messverfahren genutzt werden können. Auch müssen bestehende Messverfahren und Anwendungen nur unwesentlich verändert werden, weil z.B. bei der Verwendung von elektrisch kontaktierten Sensorschicht ebenfalls eine elektrische Spannung über zwei Kontakte von außen abgegriffen und ausgewertet wird. Dies vereinfacht die Anwendung des zuvor beschriebenen Sensorelementes auf bestehende Anwendungen und Messeinrichtungen.

Gemäß einem weiteren Aspekt der vorliegenden Erfindung weist das Verfahren ferner die Schritte auf:
- Vergleichen des bestimmten Druckes mit einem vorbestimmten Grenzdruck, und
- im Ansprechen auf ein Überschreiten des vorbestimmten Grenzdruckes, Auslösen einer Reaktion hierauf.

Der Grenzdruck hängt vom Anwendungsfall ab. Aus diesem Vergleich z.B. in einer Messeinrichtung oder in einer Steuerung können dann Reaktionen auf die Überschreitung des Grenzdruckes abgeleitet werden wie z.B. das Abbrechen eines Prozesses oder das Ausgeben eines Warnhinweises, so dass ein weiteres Ansteigen des Druckes verhindert werden kann.

Ausführungsbeispiele und weitere Vorteile der Erfindung werden nachstehend im Zusammenhang mit den folgenden Figuren erläutert. Darin zeigt:
- Fig. 1a: eine perspektivische schematische Darstellung eines elastomeren Hohlkörpers mit einem Sensorelement gemäß einem ersten Ausführungsbeispiel der vorliegenden Erfindung;
- Fig. 1b: eine perspektivische schematische Darstellung eines elastomeren Hohlkörpers mit einem Sensorelement gemäß einem zweiten Ausführungsbeispiel der vorliegenden Erfindung;
- Fig. 2a: eine perspektivische schematische Darstellung eines elastomeren Hohlkörpers mit einem Sensorelement gemäß einem dritten Ausführungsbeispiel der vorliegenden Erfindung; und
- Fig. 2b: eine perspektivische schematische Darstellung eines elastomeren Hohlkörpers mit einem Sensorelement gemäß einem viertes Ausführungsbeispiel der vorliegenden Erfindung;

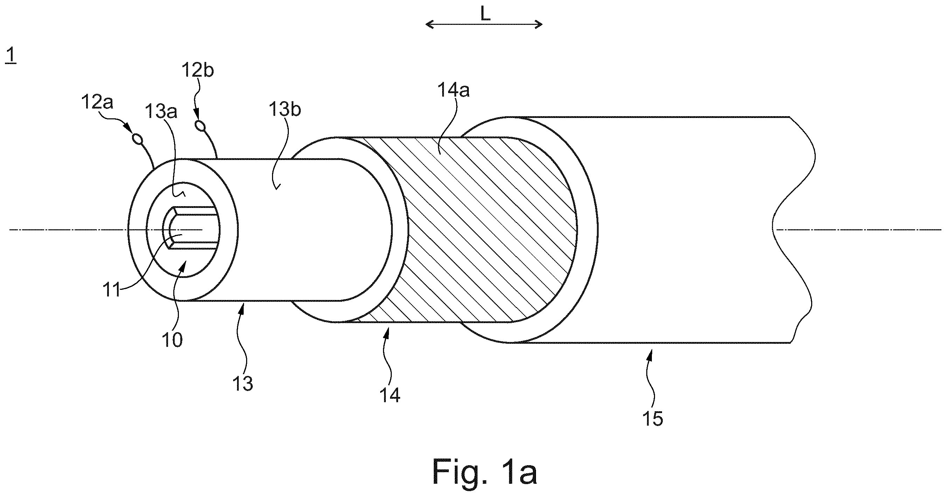

Fig. 1a zeigt eine perspektivische schematische Darstellung eines elastomeren Hohlkörpers 1 mit einem Sensorelement 1. Der elastomere Hohlkörper 1 ist als elastomerer Schlauch 1 ausgebildet mit einer ersten innersten Schicht 13, einer zweiten mittleren Schicht 14 und einer dritten äußersten Schicht 15. Die zweite Schicht 14 weist einen Festigkeitsträger 14a auf. In diesem ersten Ausführungsbeispiel ist ein Sensorelement 10 auf der Innenseite 13a der ersten Schicht angeordnet, welche dem Medium zugewandt ist, welches im Inneren des Schlauches 1 transportiert werden kann. Das Sensorelement 10 weist einen elastomeren Werkstoff 11 auf, der an zwei sich in Längsrichtung L gegenüberliegenden Seiten mit Kontaktstellen 12a, 12b versehen ist. So kann eine elektrische bzw. dielektrische Größe, welche eine Druckabhängigkeit aufweist, über den elastomeren Werkstoff 11 mittels der Kontaktstellen 12a, 12b abgegriffen und zwecks Bestimmung des Druckes des Sensorelementes 10 und damit seiner Umgebung, hier des mit dem elastomeren Werkstoff 11 direkt in Kontakt stehende Mediums, ausgewertet werden.

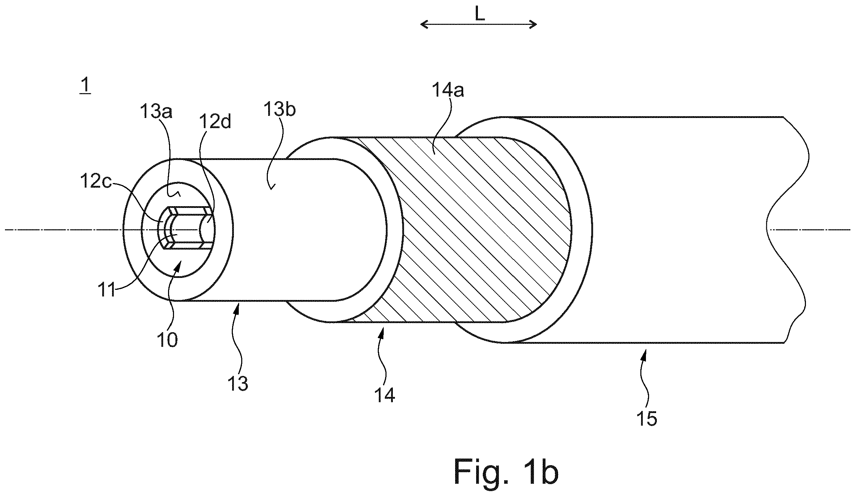

Fig. 1b zeigt eine perspektivische schematische Darstellung eines elastomeren Hohlkörpers 1 mit einem Sensorelement 10 gemäß einem ersten Ausführungsbeispiel der vorliegenden Erfindung. In diesem Fall weist das Sensorelement 10 an zwei sich in Längsrichtung L gegenüberliegenden Seiten jeweils eine Elektrode 12c, 12d auf, über die ein kontaktloser Abgriff der elektrischen bzw. dielektrischen Größe des Werkstoffs 11 durch die weiteren Schichten 14, 15 hindurch erfolgen kann.

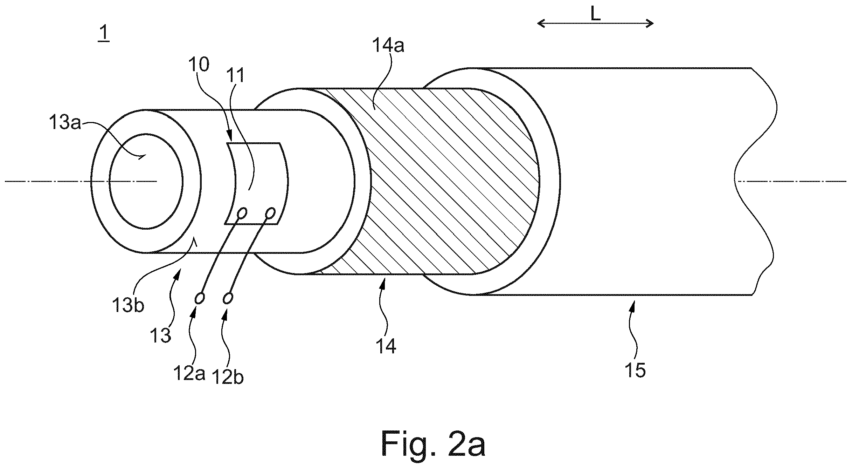

Fig. 2a zeigt eine perspektivische schematische Darstellung eines elastomeren Hohlkörpers 1 mit einem Sensorelement 10 gemäß einem zweiten Ausführungsbeispiel der vorliegenden Erfindung. In diesem Fall ist das Sensorelement 10 in die erste Schicht 13 integriert.

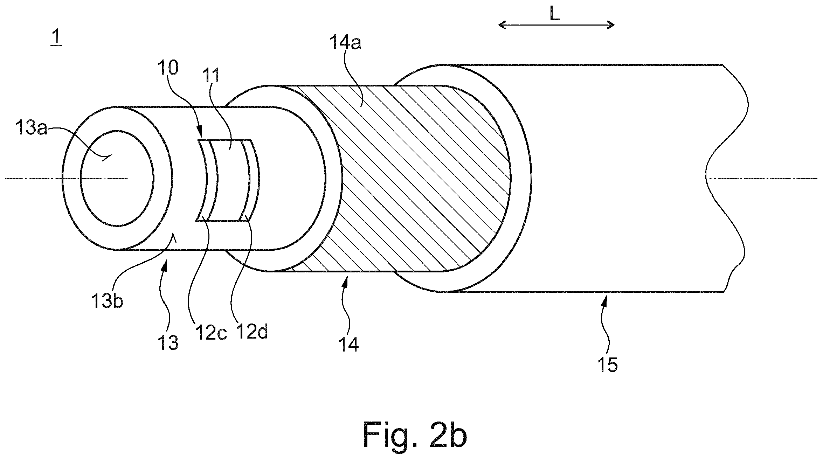

Fig. 2b zeigt eine perspektivische schematische Darstellung eines elastomeren Hohlkörpers 1 mit einem Sensorelement 10 gemäß einem dritten Ausführungsbeispiel der vorliegenden Erfindung. In diesem Fall weist das in die erste Schicht 13 integrierte Sensorelement 10 zwei Elektroden 12c, 12d auf.

### Bezugszeichenliste

### (Teil der Beschreibung)

- L: Richtung der größten Erstreckung des elastomeren Werkstoffs 11, Längsrichtung

- 1: Elastomerer Hohlkörper, elastomerer Schlauch
- 10: Sensorelement
- 11: elastomerer Werkstoff des Sensorelementes 10
- 12a, 12b: Kontaktstellen des elastomeren Werkstoffs 11
- 12c, 12d: Elektroden des elastomeren Werkstoffs 11
- 13: ersten Schicht, innerste Schicht
- 13a: dem Medium zugewandten Seite der ersten Schicht
- 13b: dem Medium abgewandten Seite der ersten Schicht
- 14: zweite Schicht, mittlere Schicht
- 14b: Festigkeitsträger der zweiten Schicht 14
- 15: dritte Schicht, äußerste Schicht

## Patentansprüche

1. Elastomerer Hohlkörper (1), insbesondere elastomerer Schlauch (1), zur Leitung und/oder Aufnahme flüssiger, gasförmiger und/oder pastöser Medien, mit einem Sensorelement (10) zur Erfassung eines Druckes, wobei das Sensorelement (10) ein elastomerer Werkstoff (11) mit einer druckabhängigen elektrischen Kapazität aufweist, deren Größe erfassbar ist, **dadurch gekennzeichnet, dass** das Sensorelement (10) zwei einander gegenüberliegende Elektroden (12c, 12d) aufweist, die in der Längsrichtung (L) des elastomeren Hohlkörpers (1) voneinander beabstandet sind.

2. Elastomerer Hohlkörper (1) nach Anspruch 1,
wobei sich die Größe der elektrischen Kapazität des elastomeren Werkstoffs (11) mit ansteigendem Druck vergrößert, und/oder
wobei die Größe der elektrischen Kapazität des elastomeren Werkstoffs (11) nicht-linear, vorzugsweise zumindest abschnittsweise sprunghaft, von dem Druck abhängt.

3. Elastomerer Hohlkörper (1) nach einem der Ansprüche 1 oder 2,
wobei das Sensorelement (10) in einer ersten Schicht (13) des elastomeren Hohlkörpers (1), welche vorzugsweise direkt mit dem Medium in Kontakt steht, integriert angeordnet ist.

4. Elastomerer Hohlkörper (1) nach einem der Ansprüche 1 oder 2,
wobei das Sensorelement (10) auf einer dem Medium zugewandten Seite (13a) einer ersten Schicht (13) des elastomeren Hohlkörpers (1), welche vorzugsweise direkt mit dem Medium in Kontakt steht, angeordnet ist.

5. Elastomerer Hohlkörper (1) nach einem der Ansprüche 1 oder 2,
wobei das Sensorelement (10) auf einer dem Medium abgewandten Seite (13b) einer ersten Schicht (13) des elastomeren Hohlkörpers (1), welche vorzugsweise direkt mit dem Medium in Kontakt steht, angeordnet ist.

6. Elastomerer Hohlkörper (1) nach einem der Ansprüche 3 bis 5,
ferner mit einer zweiten Schicht (14), welche einen Festigkeitsträger (14a) aufweist und welche vorzugsweise auf einer dem Medium abgewandten Seite (13b) der ersten Schicht (13) angeordnet ist.

7. Elastomerer Hohlkörper (1) nach einem der vorherigen Ansprüche,
wobei der elastomere Werkstoff (11) eine vulkanisierte leitfähige Kautschukmischung aufweist, die wenigstens einen polaren oder unpolaren Kautschuk und wenigstens einen leitfähigen Füllstoff und/oder wenigstens ein leitfähiges Additiv und wenigstens einen Thermoplasten und weitere Zusatzstoffe enthält.

8. Verfahren zur Druckerfassung eines elastomeren Hohlkörpers (1) nach einem der vorherigen Ansprüche, mit den Schritten:
Erfassen einer Größe einer elektrischen Kapazität des elastomeren Werkstoffs (11) des Sensorelementes (10), und
Bestimmen eines Druckes in Abhängigkeit der erfassten Größe der elektrischen Kapazität.

9. Verfahren nach Anspruch 8, ferner mit den Schritten:
Vergleichen des bestimmten Druckes mit einem vorbestimmten Grenzdruck, und
im Ansprechen auf ein Überschreiten des vorbestimmten Grenzdruckes, Auslösen einer Reaktion hierauf.

## Claims

1. Elastomer hollow body (1), in particular elastomer hose (1), for conducting and/or receiving liquid, gaseous and/or pasty media, having a sensor element (10) for detecting a pressure, wherein the sensor element (10) comprises an elastomer material (11) with a pressure-dependent electrical capacitance, the magnitude of which can be detected, **characterized in that** the sensor element (10) has two electrodes (12c, 12d) which are situated opposite one another and which are at a distance form one another in the longitudinal direction (L) of the elastomer hollow body (1).

2. Elastomer hollow body (1) according to Claim 1, wherein the magnitude of the electrical capacitance of the elastomer material (11) increases with increasing pressure, and/or wherein the magnitude of the electrical capacitance of the elastomer material (11) depends on the pressure non-linearly, preferably at least in some ranges abruptly.

3. Elastomer hollow body (1) according to either of Claims 1 and 2, wherein the sensor element (10) is arranged in an integrated manner in a first layer (13) of the elastomer hollow body (1) which is preferably in direct contact with the medium.

4. Elastomer hollow body (1) according to either of Claims 1 and 2, wherein the sensor element (10) is arranged on a side (13a) of a first layer (13) of the elastomer hollow body (1) that faces the medium and is preferably in direct contact with the medium.

5. Elastomer hollow body (1) according to either of Claims 1 and 2, wherein the sensor element (10) is arranged on a side (13b) of a first layer (13) of the elastomer hollow body (1) that faces away from the medium and is preferably in direct contact with the medium.

6. Elastomer hollow body (1) according to one of Claims 3 to 5, also having a second layer (14), which comprises a reinforcing element (14a) and is preferably arranged on a side (13b) of the first layer (13) that faces away from the medium.

7. Elastomer hollow body (1) according to one of the preceding claims, wherein the elastomer material (11) comprises a vulcanized conductive rubber mixture, which contains at least one polar or non-polar rubber and at least one conductive filler and/or at least one conductive additive and at least one thermoplastic and further additives.

8. Method for detecting the pressure of an elastomer hollow body (1) according to one of the preceding claims, comprising the steps of:
detecting a magnitude of an electrical capacitance of the elastomer material (11) of the sensor element (10), and
determining a pressure depending on the detected magnitude of the electrical capacitance.

9. Method according to Claim 8, also comprising the steps of:
comparing the determined pressure with a predetermined limit pressure, and
in response to the predetermined limit pressure being exceeded, triggering a reaction thereto.

## Revendications

1. Corps creux (1) en élastomère, en particulier tuyau flexible (1) en élastomère, destiné à conduire et/ou reprendre des fluides liquides, gazeux et/ou pâteux, le corps creux présentant un élément de capteur (10) saisissant une pression,
l'élément de capteur (10) présentant un matériau élastomère (11) dont le niveau de la capacité électrique, qui dépend de la pression, peut être saisi, **caractérisé en ce que**
l'élément de capteur (10) présente deux électrodes (12c, 12d) situées l'une en face de l'autre et maintenues à distance l'une de l'autre dans le sens de la longueur (L) du corps creux (1) en élastomère.

2. Corps creux (1) en élastomère selon la revendication 1, dans lequel le niveau de la capacité électrique du matériau élastomère (11) augmente lorsque la pression augmente et/ou dans lequel le niveau de la capacité électrique du matériau élastomère (11) dépend de manière non linéaire de la pression, de préférence au moins en partie par sauts.

3. Corps creux (1) en élastomère selon l'une des revendications 1 et 2, dans lequel l'élément de capteur (10) est intégré dans une première couche (13) du corps creux (1) en élastomère, de préférence en contact direct avec le fluide.

4. Corps creux (1) en élastomère selon l'une des revendications 1 et 2, dans lequel l'élément de capteur (10) est disposé sur un côté (13a), tourné vers le fluide, d'une première couche (13) du corps creux (1) en élastomère, de préférence en contact direct avec le fluide.

5. Corps creux (1) en élastomère selon l'une des revendications 1 et 2, dans lequel l'élément de capteur (10) est disposé sur un côté (13b) non tourné vers le fluide d'une première couche (13) du corps creux (1) en élastomère, de préférence en contact direct avec le fluide.

6. Corps creux (1) en élastomère selon l'une des revendications 3 à 5, doté en outre d'une deuxième couche (14) qui présente un renfort (14a) et disposée de préférence sur un côté (13b) de la première couche (13) non tourné vers le fluide.

7. Corps creux (1) en élastomère selon l'une des revendications précédentes, dans lequel le matériau élastomère (11) présente un mélange de caoutchouc conducteur vulcanisé qui contient au moins un caoutchouc polaire ou non polaire et au moins une charge conductrice et/ou au moins un additif conducteur et au moins un thermoplastique et d'autres additifs.

8. Procédé de saisie de la pression qui règne dans un corps creux (1) en élastomère selon l'une des revendications précédentes, le procédé présentant les étapes qui consistent à :
saisir le niveau de la capacité électrique du matériau élastomère (11) de l'élément de capteur (10) et
déterminer la pression en fonction du niveau de la capacité électrique qui a été saisie.

9. Procédé selon la revendication 8, présentant en outre les étapes qui consistent à :
comparer la pression définie à une pression limite prédéterminée et
déclencher une réaction en réponse à un dépassement de la pression limite prédéterminée.
